# EUROPEAN PATENT SPECIFICATION

(11) **EP 1 655 644 B1**
(45) Date of publication and mention of the grant of the patent: **13.01.2010**
(21) Application number: 05024452.4
(22) Date of filing: 09.11.2005
(51) Int. Cl.: G04G 5/00, G04G 9/00

(54) **Providing time information in an asynchronous mobile communication system in response to a location registration request**
Bereitstellung von Zeitinformation in einem asynchronen Mobil-Kommunikationssystem in Erwiderung auf einen Antrag zur Standortregistrierung
Fourniture d'information de temps dans un système de communication mobile asynchrone en réponse à une demande d'enregistrement de localisation

(30) Priority: 09.11.2004 KR 2004091095
(43) Date of publication of application: 10.05.2006
(73) Proprietor: Samsung Electronics Co., Ltd., Suwon-si, Gyeonggi-do (KR)
(72) Inventor: Park, Jong-Man, Yeongtong-gu Suwon-si Gyeonggi-do (KR)
(74) Representative: Grünecker, Kinkeldey, Stockmair & Schwanhäusser Anwaltssozietät

(56) References cited:
- EP-A- 1 394 641
- DE-A1- 10 065 484
- FR-A- 2 784 760
- US-A1- 2004 192 254

## Description

The present invention relates generally to a mobile communication system and, in particular, to a method for providing time information to a mobile station in an asynchronous mobile communication system such as Global System for Mobile communication (GSM) or Universal Mobile Telecommunications System (UMTS).

In recent years with increasing frequency, mobile stations have been used to tell time in place of a watch or a cellular phone utilized for an alarm function, and a calling or called time have been recorded and used as data. Accordingly, if possible, the time maintained by the mobile station should be set exactly.

In general, in a synchronous mobile communication system such as a Code Division Multiple Access (CDMA) system, a mobile station and a mobile switching center are synchronized with each other in time. To accomplish this, the mobile station sets its time using initial time information included in a broadcasting signal of the mobile switching center. In the synchronous mobile communication system, the mobile station can maintain an exact time provided it continues to receive the broadcasting signal.

However, in an asynchronous mobile communication system such as GSM or UMTS, a mobile station and a mobile switching center are not synchronized with each other in time. Accordingly, a standard for separately transmitting time information to the mobile station is provided. This standard is specified in detail in Technical Specification (TS) 24.008 of a 3^{rd} Generation Partnership Project (3GPP) standard, and is called a multimedia (MM) information message. The MM information message can transmit time information such as a network name, a local time zone, a universal time zone, and a network daylight saving time. In the asynchronous mobile communication system, the mobile station can acquire the time information only by using MM information.

However, at present, such a method for providing the time information using the MM information is not being employed in GSM and UMTS networks. Even when- the 3GPP standard- is employed, the standard does not specify when the MM information is to be transmitted to the mobile station. Accordingly, manufacturers or service providers building the asynchronous mobile communication system do not have a common reference for MM information transmission. Thus, the MM information may not provided or may provided at different times. The consequence is that the mobile station cannot obtain the time information in an orderly fashion. The user is inconvenienced by not being able to receive a correct time from the mobile station.

Japanese Patent Publication No. 2000-287273 discloses a technology for providing time information to a terminal in a personal handy system (PHS). This technology is applied to the PHS, but is not applicable to GSM or UMTS. In the Japanese Patent Publication No. 2000-287273, the time information is transmitted whenever the terminal is shifted in location between base stations. Therefore, the technology of Japanese Patent Publication No. 2000-287273 has a drawback in that even when the time information is not required, the time information is unnecessarily transmitted.

DE 100 65 484 A1 relates to time setting of terminals of cellular networks and mentions as an example GSM. The described method uses a short message service (SMS) where the terminal sends a short message into the network where the terminal itself has been indicated as the destination. The network receives the short message and forwards it after providing the message with a time stamp. The short message including the time stamp is received at the terminal and the time setting is effectuated.

US 2004/192254 A1 relates to a communication method and system for selecting a home public land mobile network (HPLMN) which is capable of reducing power consumption when a mobile station (MS) searches for an HPLMN or higher-priority PLMN. During a method for selecting a PLMN using the mobile communication system, a home location register (HLR) transmits the set value of the HPLMN rescan timer to the MS. Further, the MS performs an operation of searching for the HPLMN on the basis of the time period set according to the value of the HPLMN rescan timer received from the HLR.

EP-A-1 394 641 relates to a method for transmitting a real time reference to a mobile station. The absolute time and time frame information are transmitted in a signaling message which is transmitted for a channel configuration, a procedure for a location update or for transmitting an SMS message.

It is the object of the present invention to provide a method for providing time information in which a time difference is compensated using an Unstructured Supplementary Service Data (USSD) message in place of a multimedia (MM) information message in an asynchronous mobile communication system.

This object is solved by the subject matter of the independent claims.

Preferred embodiments are defined by the subject matter of the dependent claims.

It is an aspect of the present invention to present a method for providing time information in an asynchronous mobile communication system whenever location is registered in a visitor location register (VLR) unit different from the current VLR for the mobile station unit.

To achieve the above, there is provided a method for providing time information in an asynchronous mobile communication system, the method including the steps of, upon receiving a location registration request from a mobile station, detecting a location shift of the mobile station and performing location registration depending on the detection result; determining whether to transmit the time information to the mobile station depending on the location shift of the mobile station; and upon determining to transmit the time information to the mobile station, generating a string message corresponding to the time information and transmitting the string message to the mobile station.

An embodiment of the present invention relates to a method for providing time information in an asynchronous mobile communication system, the method additionally including the steps of transmitting, by a mobile station, a location registration request to a visitor location register; receiving a string message corresponding to the time information from the asynchronous mobile communication system when the location registration request is initially transmitted to the visitor location register; acquiring the time information from the received string message; and controlling time using the acquired time information.

The present invention will become more apparent from the following detailed description when taken in conjunction with the accompanying drawings in which:
FIG. 1 is a block diagram illustrating an asynchronous mobile communication system according to an embodiment of the present invention;
FIG. 2 is a flowchart illustrating a method for providing time information in an asynchronous mobile communication system according to an embodiment of the present invention;
FIG. 3 is a flowchart illustrating a location register procedure in an asynchronous mobile communication system according to an embodiment of the present invention; and
FIG. 4 is a view illustrating a string message corresponding to time information according to an embodiment of the present invention.

A preferred embodiment of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

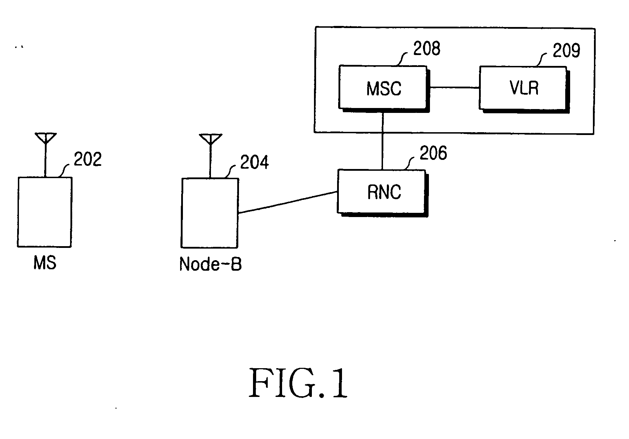

FIG. 1 is a block diagram illustrating an asynchronous mobile communication system according to an embodiment of the present invention. Referring to FIG. 1, the inventive asynchronous mobile communication system, which is a Universal Mobile Telecommunications System (LTMTS), includes a mobile station (MS) 202, a Node-B 204, a radio network controller (RNC) 206, a mobile switching center (MSC) 208, and a visitor location register (VLR) 209.

The MS 202 communicates data with a radio network. The data includes the MS's basic information as set by a manufacturer and a mobile communication service provider, mobility information, an execution program for various application programs, a user's personal short message dialing information and the like.

The Node-B (base station) 204 is hardware for transmitting and receiving data through a radio interface. The Node-B 204 refers to a physical base station equipment for setting up a radio connection physical channel and communicating with the MS 202 using the physical channel. The RNC 206 is a network constituent element for controlling one or more Node-Bs 204. The RNC 206 controls a radio resource of a domain (including a plurality of cells) to which it belongs. The MSC 208 performs circuit switched access management and call processing. The VLR 209 performs mobility management and subscriber profile management, and also performs location registration on the MS 202.

In the foregoing asynchronous mobile communication system, during location registration on the MS 202, time information is provided to the MS 202 using a string message such as an Unstructured Supplementary Service Data (USSD) message. In general, there are various supplementary services (SS) in GSM and UMTS networks. The supplementary services can be managed using a series of string messages. The string message input is standardized in GSM. The string message is interpreted in the MS 202 and allowed to send a signal to the network. A USSD string message is a typical one of the string messages. The USSD string message is used to transmit information or a specific command from the GSM and UMTS networks to the MS 202. A specific menu is not required for a service of the USSD string message. When a user directly inputs the USSD string message (that is, a command) to an IDLE (idle state), the MS 202 immediately transmits the command to the network. Then the network receives the USSD string message and performs the command.

In the asynchronous mobile communication system, during location registration, the time information is provided to the MS 202 using the USSD string message. For this, the MS 202 and the VLR 209 should be able to recognize the USSD string message representing the time information.

A detailed description will now be made of a method for providing the time information in the asynchronous mobile communication system according to an embodiment of the present invention.

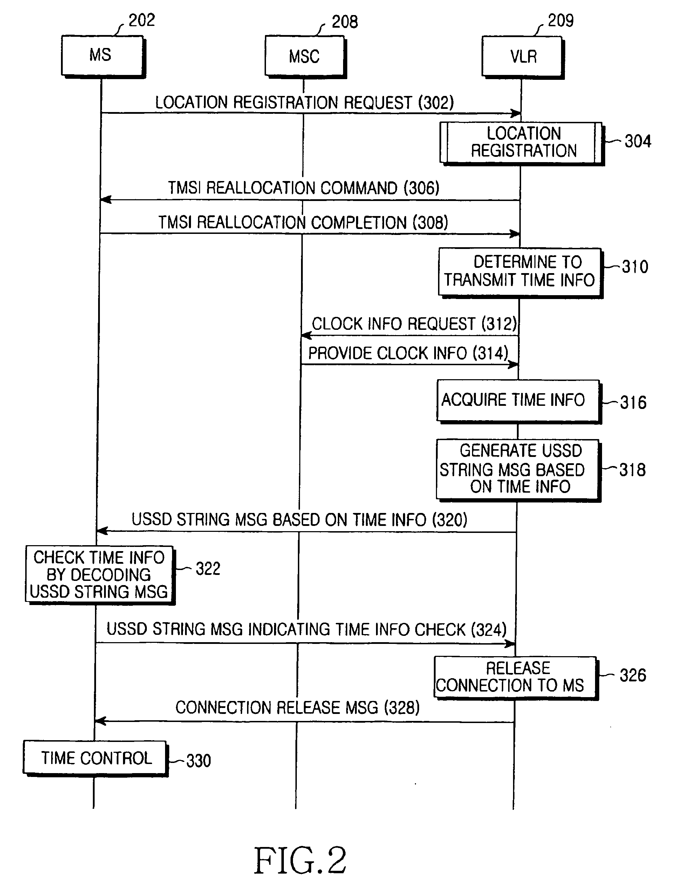

FIG. 2 is a flowchart illustrating the method for providing the time information in the asynchronous mobile communication system according to the embodiment of the present invention. Referring to FIG. 2, when an MS 202 is shifted in location, the MS 202 transmits a location registration request to a VLR 209 in step 302. The VLR 209 performs location registration in step 304 in response to the location registration request from the MS 202.

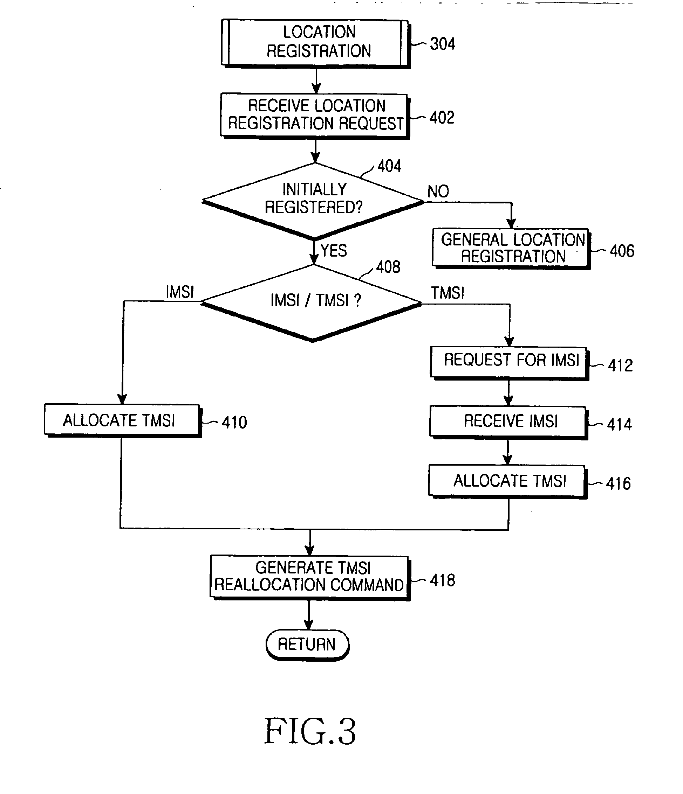

A location registration procedure by the VLR 209 is shown in FIG. 3. FIG. 3 is a flowchart illustrating the location register procedure in the asynchronous mobile communication system according to an embodiment of the present invention. Referring to FIG. 3, the VLR 209 receives a location registration request from the MS 202 in step 402. The MS 202 transmits the location registration request in the following eight cases:
1. Reselecting a cell in the same RNC;
2. Reselecting a cell between RNCs in the same MSC/VLR;
3. Reselecting a cell between different MSCs/VLRs;
4. Performing periodical location update in the same MSC/VLR;
5. Performing periodical location update due to shift between different MSCs/VLRs;
6. Performing location update when the MS is turned on and is in an International Mobile Station Identity (IMSI)-attached state;
7. Performing location update due to power-on in the same MSC/VLR; and
8. Performing location update due to power-on in the MSC/VLR different from a conventional one.

In this embodiment, during the location registration, it is determined whether to transmit the time information to the MS 202 due to a location shift of the MS 202. Preferably, it is determined whether to transmit the time information to the MS 202 depending on whether or not the MS 202 is initially location-registered in the VLR 209.

Accordingly, the time information is not always provided to the MS 202 when the location registration is performed in all of the above eight cases. Rather, the time information is provided to the MS 202 only in the third, fifth and eighth cases. In the first, second, fourth, sixth and seventh cases where the MS 202 requests for the location registration and the location update are performed in the same MSC/VLR, a shift distance for the MS 202 is relatively short. In this case, there is almost no time difference. Therefore, it does not matter whether separate time information is not provided.

However, in the third, fifth and eighth cases where the MS 202 requests for the location registration and the location update is not performed in the same MSC/VLR but is performed in another MSC/VLR to which the MS 202 is shifted, the shift distance for the MS 202 is significantly long. Accordingly, in the third, fifth and eighth cases, there is high probability that the time difference will exist between the time at the location where the MS 202 was previously registered and the time at the location where the new registration is to take place. Therefore, in the third, fifth and eighth cases where the location registration is performed in a MSC/VLR unit (on a per-MCS/VLR basis), the time information is transmitted to the MS 202.

In other words, only in the third, fifth and eighth cases where there is high probability that the time difference will occur (that is, the MS 202 will be initially location-registered in the VLR), the time information is separately transmitted to the MS 202. As a result, a load on the radio network can be reduced and efficiency improved by reducing separate transmission of the time information when it is unnecessary to correct the time difference.

In step 404, the VLR 209 determines whether the location registration request from the MS 202 corresponds to the third, fifth and eighth cases. In other words, when the VLR 209 receives the location registration request from the MS 202, it is determined whether the MS 202 is initially location-registered in the VLR 209. This is to determine whether the MS 202 is shifted in location in the MSC/VLR unit. At this time, the MS 202 requests the location registration using the International Mobile Subscriber Identity (IMSI) or a Temporary Mobile Station/Subscriber Identity (TMSI). The VLR 209 determines whether the IMSI or the TMSI of the MS 202 requesting the location registration is stored in its database (DB), to determine whether the MS 202 should initially transmit the location registration request to the VLR 209. The IMSI refers to a unique 15-digit mobile station identification number which is allocated to each MS 202 in a service subscription phase, and is mainly used in an international roaming service. The TMSI refers to a mobile station identification number used by a service provider and the mobile communication system. The TMSI is temporarily allocated to each MS 202 and is terminated upon service termination.

If it is determined that the MS 202 does not initially request the location registration (that is, if it is determined that the MS 202 is not shifted in location in the MSC/VLR unit), the VLR 209 performs a general location registration process in step 406. However, if it is determined in step 404 that the MS 202 initially requests the location registration (that is, if it is determined that the MS 202 is shifted in location in the MSC/VLR unit), the VLR 209 determines whether the location registration request uses the IMSI or the TMSI in step 408. If it is determined that the location registration request uses the IMSI, the VLR 209 allocates a new TMSI corresponding to the corresponding IMSI in step 410. However, if it is determined that the location registration request uses the TMSI, the VLR 209 transmits an IMSI request to the MS 202 in step 412. In step 414, the VLR 209 receives the IMSI from the MS 202 and checks a subscriber, using the IMSI. In step 416, the VLR 209 allocates a new TMSI corresponding to the corresponding IMSI. After the allocation of the new TMSI, the VLR 209 performs a location registration process of generating a TMSI reallocation command using the newly allocated TMSI in step 418.

After the location registration is completed through the procedure of FIG. 3, the VLR 209 transmits a location registration reply message to the MS 202 in step 306 of FIG. 2. When the VLR 209 performs the general location registration process, it transmits the location registration reply message corresponding to the general location registration process, to the MS 202. When the VLR 209 allocates the new TMSI to the MS 202 to perform the location registration, it transmits the location registration reply message corresponding to the TMSI reallocation command, to the MS 202. Then the MS 202 receives the reallocated TMSI depending on the TMSI reallocation command, and transmits a TMSI reallocation completion message to the VLR 209 to inform the VLR 209 of the TMSI reallocation in step 308.

Upon receiving the TMSI reallocation completion message from the MS 202, the VLR 209 determines to transmit the time information to the MS 202 in step 3 10. In other words, where the TMSI is reallocated to the MS 202, this reveals the MS 202 is shifted in location in the MSC/VLR unit. This means that there is a difference between the time carried by the MS 202 and the time at the new location for the MS202. Therefore, the VLR 209 determines to transmit the time information for correcting the time difference to the MS 202.

Accordingly, the VLR 209 transmits a clock information request to a MSC 208 to obtain exact time information of the MS 202 in step 312. Then the MSC 208 provides its own clock information to the VLR 209 in step 314.

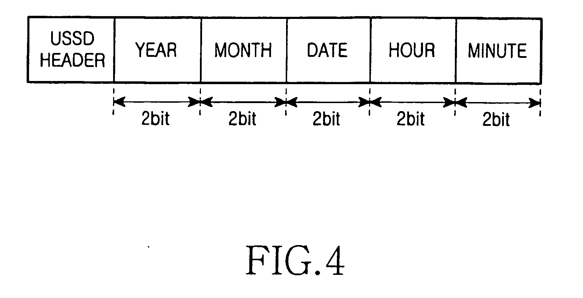

Then the VLR 209 receives the clock information from the MSC 208, and acquires current exact time information of the MS 202 using the clock information in step 316. In step 318, the VLR 209 generates a string message corresponding to the time information. The string message includes a header informing that the string message corresponds to the time information, and a string corresponding to the time information. The string message corresponding to the time information is shown in FIG. 4.

Referring to FIG. 4, the string message can be comprised of the USSD string message. The USSD string message includes a USSD Header field, and a USSD String field corresponding to the time information. The USSD String field includes a Year field, a Month field, a Date field, an Hour field, and a Minute field. The USSD Header field includes a USSD header indicating that the USSD message includes the time information. The Year field includes year information. The Month field includes month information. The Date field includes date information. The Hour field includes hour information. The Minute field includes minute information. Each size of the Year field, the Month field, the Date field, the Hour field and the Minute field is two bits.

After the generation of the USSD string message, the VLR 209 transmits the USSD string message corresponding to the time information, to the MS 202 in step 320. The MS 202 receives the USSD string message, and decodes the USSD string message to check the time information in step 322. After that, the MS 202 transmits the USSD string message, which reports the check of the time information, to the VLR 209 in step 324.

The VLR 209 receives the USSD string message from the MS 202, and releases a connection to the MS 202 in step 326. The VLR 209 transmits a connection release message to the MS 202 in step 328.

Then the MS 202 performs a time control operation in step 330, using the time information received from the VLR 209. At this point, the MS 202 can apply the time information received from the VLR 209 without change, to set its time. Alternatively, after comparing the current time information, which is set in a previously stored universal time information database (DB), with the time information received from the VLR 209 and calculating the time difference, the MS 202 can perform the time control operation according to the calculated time difference. When the time control is performed using only the time information, an erroneous correction caused by a minute/second-unit error can be advantageously prevented. The minute/second-unit error can be generated due to transmission delay. After the time control, the MS 202 preferably informs the user of a result of the time control. For example, when the location of the MS 202 shifts from Seoul to London, the MS 202 performs the time control, and the time information is changed due to the time control. The MS 202 can report the result of the time control such as 11:00 → 02:00.

As described above, the present invention is advantageous in that when the location of the MS shifts between continents, nations and cities, the time information is provided to the MS using the USSD message in the asynchronous mobile communication system, thereby maintaining an exact time without the time difference caused by the location shift.

Further, the present invention is advantageous in that the time information can be provided to the MS in the asynchronous mobile communication system whenever the location is registered in the VLR unit having high probability that the time difference will happen.. This selective transmission of time information reduces the load of the radio network compared to when the time information is provided in a conventional base station unit (on a per-base station basis), Efficiency is also improved by separate transmission of the time information only when it is unnecessary to correct the time difference.

While the invention has been shown and described with reference to a certain preferred embodiment thereof, it will be understood by those skilled in the art that various changes in form and details may be made therein without departing from the scope of the invention as defmed by the appended claims. In the embodiment of the present invention, the asynchronous mobile communication system is illustrated exemplifying UMTS. However, it is obvious that the present invention is also applicable to other asynchronous mobile communication systems such as GSM. Further, in the embodiment of the present invention, the time information is illustrated exemplifying its generation and transmission using the USSD string message, but the time information can be generated and transmitted using a string message of a different format.

## Claims

1. A method for providing time information in an asynchronous mobile communication system, the method comprising the steps of:
upon receiving (402) a location registration request (302) from a mobile station (202), detecting a location shift of the mobile station and performing location registration (304) depending on the detection result;
determining (310) whether to transmit the time information to the mobile station depending on the location shift of the mobile station; and
upon determining to transmit the time information to the mobile station, generating (318) a string message corresponding to the time information and transmitting (320) the string message to the mobile station.

2. The method of claim 1, wherein the step of determining whether to transmit the time information to the mobile station depending on the location shift of the mobile station further comprises the step of determining whether the mobile station is initially location-registered in response to said location registration request.

3. The method of claim 1 or 2, wherein the location registration step comprises the steps of:
receiving a location registration request signal from the mobile station;
determining (404) whether the mobile station is initially location-registered in response to said location registration request; and
performing (406) location registration using a previously allocated temporary mobile station/subscriber identity, TMSI, if it is determined that the mobile station is not initially location-registered, and reallocating (410, 416, 306) a TMSI and performing (418) the location registration using the TMSI if it is determined that the mobile station is initially location-registered.

4. The method of claim 3, wherein the step of determining whether the mobile station is initially location-registered comprises the step of determining (408) whether an international mobile station identity, IMSI, or the TMSI of the mobile station is previously stored.

5. The method of claim 4, wherein the step of determining whether to transmit the time information to the mobile station, comprises the steps of:
determining whether the mobile station is location-registered depending on the previously allocated TMSI or the reallocated TMSI; and
determining not to transmit the time information to the mobile station when the mobile station is location-registered depending on the previously allocated TMSI, and determining to transmit the time information to the mobile station when the mobile station is location-registered depending on the reallocated TMSI.

6. The method of one of claims 1 to 5, wherein the string message has a header indicating that the string message corresponds to the time information, and a string corresponding to the time information.

7. The method of claim 6, wherein the time information comprises year information, month information, date information, hour information, and minute information.

8. The method of claim 6, wherein the string message is a unstructured supplementary service data, USSD, string message.

9. The method of claim 1 further comprising the steps of:
by the mobile station:
transmitting (302) the location registration request to a visitor location register (209);
receiving (320) the string message corresponding to the time information from the asynchronous mobile communication system when the location registration request is initially transmitted to the visitor location register;
acquiring (322) the time information from the received string message; and
controlling (330) time using the acquired time information.

10. The method of claim 9, further comprising the step of allocating (410, 416) a new temporary mobile station/subscriber identity, TMSI, to the mobile station if the mobile station is initially location-registered in response to said location registration request.

11. The method of claim 2, 9 or 10, wherein the mobile station is not initially location-registered in response to said location registration request in any one of cases where a cell is reselected in the same RNC area, a cell is reselected between RNC areas in the same MSC/VLR, a periodical location update is performed in the same MSC/VLR area, a location update is performed when the mobile station is turned on and is in an international mobile station identity, IMSI,-attached state, and a location update is performed due to power-on in the same MSC/VLR area.

12. The method of one of claims 2 or 9 to 11, wherein the mobile station is initially location-registered in response to said location registration request in any one of cases where a periodical location update is performed due to a location shift between different MSCs/VLRs, a cell is reselected between the different MSCs/VLRs, and a location update is performed due to power-on in the different MSC/VLR.

13. The method of one of claims 9 to 12, wherein the mobile station applies the acquired time information without change, to control the time.

14. The method of one of claims 9 to 13, wherein the mobile station compares current time information, which is set in a previously stored universal time information database, with the acquired time information to calculate a time difference, and controls the time by the calculated time difference.

15. The method of one of claims 9 to 14, wherein the string message has a header indicating that the string message corresponds to the time information, and a string corresponding to the time information.

16. The method of claim 15, wherein the time information comprises year information, month information, date information, hour information, and minute information.

17. The method of claim 15, wherein the string message is a unstructured supplementary service data, USSD, string message.

## Patentansprüche

1. Verfahren zum Bereitstellen von Zeitinformationen in einem asynchronen Mobilkommunikationssystem, wobei das Verfahren die folgenden Schritte umfasst:
beim Empfangen (402) einer Standortregistrierungs-Anforderung (302) von einer Mobilstation (202) Erfassen einer Standortverlagerung der Mobilstation und Durchführen eine Standortregistrierung (304) in Abhängigkeit von dem Erfassungsergebnis;
in Abhängigkeit von der Standortverlagerung der Mobilstation Bestimmen (310), ob die Zeitinformationen zu der Mobilstation gesendet werden; und
wenn bestimmt wird, dass die Zeitinformationen zu der Mobilstation gesendet werden, Erzeugen (318) einer String-Nachricht, die den Zeitinformationen entspricht, und Senden (320) der String-Nachricht zu der Mobilstation.

2. Verfahren nach Anspruch 1, wobei der Schritt, mit dem in Abhängigkeit von der Standortverlagerung der Mobilstation bestimmt wird, ob die Zeitinformationen zu der Mobilstation gesendet werden, des Weiteren den Schritt umfasst, mit dem bestimmt wird, ob in Reaktion auf die Standortregistrierungs-Anforderung zuerst Standortregistrierung der Mobilstation durchgeführt wird.

3. Verfahren nach Anspruch 1 oder 2, wobei der Standortregistrierungsschritt die folgenden Schritte umfasst:
Empfangen eines Standortregistrierungs-Anforderungssignals von der Mobilstation;
in Reaktion auf die Standortregistrierungs-Anforderung Bestimmen (404), ob zuerst Standortregistrierung der Mobilstation durchgeführt wird; und
Durchführen (406) von Standortregistrierung unter Verwendung einer im Voraus zugewiesenen TMSI (temporary mobile station/subscriber identity), wenn bestimmt wird, dass nicht zuerst Standortregistrierung der Mobilstation durchgeführt wird, und erneutes Zuweisen (410, 416, 306) einer TMSI sowie Durchführen (418) der Standortregistrierung unter Verwendung der TMSI, wenn bestimmt wird, dass zuerst Standortregistrierung der Mobilstation durchgeführt wird.

4. Verfahren nach Anspruch 3, wobei der Schritt, mit dem bestimmt wird, ob zuerst Standortregistrierung der Mobilstation durchgeführt wird, den Schritt umfasst, mit dem bestimmt wird (408), ob eine IMSI (international mobile station identity) oder die TMSI der Mobilstation bereits gespeichert ist.

5. Verfahren nach Anspruch 4, wobei der Schritt, mit dem bestimmt wird, ob die Zeitinformationen zu der Mobilstation gesendet werden, den folgenden Schritt umfasst:
in Abhängigkeit von der bereits zugewiesenen TMSI oder der neu zugewiesenen TMSI Bestimmen, ob Standortregistrierung der Mobilstation durchgeführt wird; und
Bestimmen, dass die Zeitinformationen nicht zu der Mobilstation gesendet werden, wenn Standortregistrierung der Mobilstation in Abhängigkeit von der bereits zugewiesenen TMSI durchgeführt wird, und Bestimmen, dass die Zeitinformationen zu der Mobilstation gesendet werden, wenn Standortregistrierung der Mobilstation in Abhängigkeit von der neu zugewiesenen TMSI durchgeführt wird.

6. Verfahren nach einem der Ansprüche 1 bis 5, wobei die String-Nachricht einen Header, der anzeigt, dass die String-Nachricht den Zeitinformationen entspricht, sowie einen String hat, der den Zeitinformationen entspricht.

7. Verfahren nach Anspruch 6, wobei die Zeitinformationen Jahr-Informationen, Monats-Informationen, Datums-Informationen, Stunden-Informationen und Minuten-Informationen umfassen.

8. Verfahren nach Anspruch 6, wobei die String-Nachricht eine USSD-String-Nachricht (unstructured supplementary service data string message) ist.

9. Verfahren nach Anspruch 1, das des Weiteren die folgenden Schritte der Mobilstation umfasst:
Senden (302) der Standortregistrierungs-Anforderung zu einem VLR (visitor location register) (209);
Empfangen (320) der String-Nachricht, die den Zeitinformationen entspricht, von dem asynchronen Mobilkommunikationssystem, wenn die Standortregistrierungs-Anforderung zuerst zu dem VLR gesendet wird;
Beziehen (322) der Zeitinformationen aus der empfangenden String-Nachricht; und Steuern (330) von Zeit unter Verwendung der bezogenen Zeitinformationen.

10. Verfahren nach Anspruch 9, das des Weiteren den Schritt des Zuweisens (410, 416) einer neuen TMSI zu der Mobilstation umfasst, wenn in Reaktion auf die Standortregistrierungs-Anforderung zuerst Standortregistrierung der Mobilstation durchgeführt wird.

11. Verfahren nach Anspruch 2, 9 oder 10, wobei Standortregistrierung der Mobilstation in Reaktion auf die Standortregistrierungs-Anforderung in einem beliebigen der Fälle zuerst nicht durchgeführt wird, in denen eine Zelle in dem gleichen RNC-Bereich neu ausgewählt wird, eine Zelle zwischen RNC-Bereichen in der/dem gleichen MSC/VLR neu ausgewählt wird, eine periodische Standortaktualisierung in dem gleichen MSC/VLR-Bereich durchgeführt wird, eine Standortaktualisierung durchgeführt wird, wenn die Mobilstation angeschaltet wird und sich in einem IMSI-Anmeldezustand befindet, und eine Standortaktualisierung aufgrund von Anschalten in dem gleichen MSC/VLR-Bereich durchgeführt wird.

12. Verfahren nach einem der Ansprüche 2 oder 9 bis 11, wobei zuerst Standortregistrierung der Mobilstation in Reaktion auf die Standortregistrierungs-Anforderung in einem beliebigen der Fälle durchgeführt wird, in dem eine periodische Standortaktualisierung aufgrund einer Standortverlagerung zwischen verschiedenen MSC/VLR durchgeführt wird, eine Zelle zwischen den verschiedenen MSC/VLR neu ausgewählt wird und eine Standortaktualisierung aufgrund von Anschalten in der/dem anderen MSC/VLR durchgeführt wird.

13. Verfahren nach einem der Ansprüche 9 bis 12, wobei die Mobilstation die bezogenen Zeitinformationen ohne Änderung anwendet, um die Zeit zu steuern.

14. Verfahren nach einem der Ansprüche 9 bis 13, wobei die Mobilstation aktuelle Zeitinformationen, die in einer im Voraus gespeicherten Universalzeitinformations-Datenbank festgelegt sind, mit den bezogenen Zeitinformationen vergleicht, um eine Zeitdifferenz zu berechnen, und sie die Zeit anhand der berechneten Zeitdifferenz steuert.

15. Verfahren nach einem der Ansprüche 9 bis 14, wobei die String-Nachricht einen Header, der anzeigt, dass die String-Nachricht den Zeitinformationen entspricht, und einen String hat, der den Zeitinformationen entspricht.

16. Verfahren nach Anspruch 15, wobei die Zeitinformationen Jahr-Informationen, Monats-Informationen, Datums-Informationen, Stunden-Informationen und Minuten-Informationen umfassen.

17. Verfahren nach Anspruch 15, wobei die String-Nachricht eine USSD-String-Nachricht (unstructured supplementary service data string message) ist.

## Revendications

1. Procédé pour fournir des informations temporelles dans un système de communication mobile asynchrone, le procédé comprenant les étapes consistant à :
lors de la réception (402) d'une requête d'enregistrement de position (302) provenant d'une station mobile (202), détecter un changement de position de la station mobile et effectuer un enregistrement de position (304) en fonction du résultat de la détection ;
déterminer (310) s'il faut transmettre les informations temporelles à la station mobile en fonction du changement de position de la station mobile ; et
lors de la détermination de la transmission des informations temporelles à la station mobile, générer (318) un message de chaîne correspondant aux informations temporelles et transmettre (320) le message de chaîne à la station mobile.

2. Procédé selon la revendication 1, dans lequel l'étape qui consiste à déterminer s'il faut transmettre les informations temporelles à la station mobile en fonction du changement de position de la station mobile comprend en outre l'étape qui consiste à déterminer si la station mobile est initialement enregistrée selon sa position en réponse à ladite requête d'enregistrement de position.

3. Procédé selon la revendication 1 ou 2, dans lequel l'étape d'enregistrement de position comprend les étapes qui consistent à :
recevoir un signal de requête d'enregistrement de position provenant d'une station mobile ;
déterminer (404) si la station mobile est initialement enregistrée selon sa position en réponse à ladite requête d'enregistrement de position ; et
effectuer (406) un enregistrement de position à l'aide d'une identité temporaire de station mobile / d'abonné TMSI (Temporary Mobile Station/Subscriber Identity) allouée précédemment, s'il est déterminé que la station mobile n'est pas initialement enregistrée selon sa position, et réallouer (410, 416, 306) une TMSI et
effectuer (418) l'enregistrement de position à l'aide de la TMSI s'il est déterminé que la station mobile est initialement enregistrée selon sa position.

4. Procédé selon la revendication 3, dans lequel l'étape qui consiste à déterminer si la station mobile est initialement enregistrée selon sa position comprend l'étape qui consiste à déterminer (408) si une identité de station mobile internationale IMSI (International Mobile Station Identity) ou la TMSI de la station mobile est enregistrée précédemment.

5. Procédé selon la revendication 4, dans lequel l'étape qui consiste à déterminer s'il faut transmettre les informations temporelles à la station mobile comprend les étapes qui consistent à :
déterminer si la station mobile est enregistrée selon sa position en fonction de la TMSI allouée précédemment ou de la TMSI réallouée ; et
déterminer de ne pas transmettre les informations temporelles à la station mobile lorsque la station mobile est enregistrée selon sa position en fonction de la TMSI allouée précédemment, et à déterminer la transmission des informations temporelles à la station mobile lorsque la station mobile est enregistrée selon sa position en fonction de la TMSI réallouée.

6. Procédé selon l'une des revendications 1 à 5, dans lequel le message de chaîne comporte un en-tête indiquant que le message de chaîne correspond aux informations temporelles et une chaîne correspondant aux informations temporelles.

7. Procédé selon la revendication 6, dans lequel les informations temporelles comprennent les informations de l'année, du mois, du jour, de l'heure et de la minute.

8. Procédé selon la revendication 6, dans lequel le message de chaîne est un message de chaîne de données de service supplémentaires peu structurées USSD (Unstructured Supplementary Service Data).

9. Procédé selon la revendication 1, comprenant en outre les étapes qui consistent à :
par la station mobile :
transmettre (302) à un registre de position de visiteur (209) la requête d'enregistrement de position ;
recevoir (320) du système de communication mobile asynchrone le message de chaîne correspondant aux informations temporelles lorsque la requête d'enregistrement de position est initialement transmise au registre de position de visiteur ;
acquérir (322) les informations temporelles du message de chaîne reçu ; et
contrôler (330) le temps à l'aide des informations temporelles acquises.

10. Procédé selon la revendication 9, comprenant en outre l'étape qui consiste à allouer (410, 416) à la station mobile une nouvelle identité temporaire de station mobile / d'abonné TMSI si la station mobile est initialement enregistrée selon sa position en réponse à ladite requête d'enregistrement de position.

11. Procédé selon la revendication 2, 9 ou 10, dans lequel la station mobile n'est pas initialement enregistrée selon sa position en réponse à ladite requête d'enregistrement de position dans l'un quelconque des cas où un e cellule est sélectionnée de nouveau dans la même zone RNC, où une cellule est sélectionnée de nouveau entre des zones RNC dans un même MSCNLR, où une mise à jour de position périodique est effectuée dans la même zone MSCNLR, où une mise à jour de position est effectuée lorsque la station mobile est mise en marche et se trouve dans un état attaché à une d'identité de station mobile internationale IMSI, et où une mise à jour de position est effectuée du fait d'une mise en marche dans la même zone MSCNLR.

12. Procédé selon l'une des revendications 2 ou 9 à 11, dans lequel la station mobile est initialement enregistrée selon sa position en réponse à ladite requête d'enregistrement de position dans l'un quelconque des cas où une mise à jour de position périodique est effectuée du fait d'un changement de position entre différents MSC/VLR, où une cellule est sélectionnée de nouveau entre les différents MSC/VLR et où une mise à jour de position est effectuée du fait d'une mise en marche dans les différents MSC/VLR.

13. Procédé selon l'une des revendications 9 à 12, dans lequel la station mobile applique les informations temporelles acquises sans changement, pour contrôler le temps.

14. Procédé selon l'une des revendications 9 à 13, dans lequel la station mobile compare les informations temporelles courantes, qui sont établies dans une base de données d'informations temporelles universelle enregistrée précédemment, avec les informations temporelles acquises pour calculer une différence temporelle, et contrôle le temps par la différence de temps calculée.

15. Procédé selon l'une des revendications 9 à 14, dans lequel le message de chaîne comporte un en-tête indiquant que le message de chaîne correspond aux informations temporelles et une chaîne correspondant aux informations temporelles.

16. Procédé selon la revendication 15, dans lequel les informations temporelles comprennent les informations de l'année, du mois, du jour, de l'heure et de la minute.

17. Procédé selon la revendication 15, dans lequel le message de chaîne est un message de chaîne de données de service supplémentaires peu structurées USSD (Unstructured Supplementary Service Data).
